(19) Europäisches Patentamt
European Patent Office
Office européen des brevets

(11) **EP 0 441 419 B1**

(12) **EUROPEAN PATENT SPECIFICATION**

(45) Date of publication and mention
of the grant of the patent:
**03.09.1997  Bulletin 1997/36**

(51) Int Cl.⁶: **G02B 6/28**, G02B 6/14

(21) Application number: **91200068.4**

(22) Date of filing: **15.01.1991**

(54) **Fibre optic assembly**

Faseroptische Anordnung

Assemblage de fibre optique

(84) Designated Contracting States:
**AT DE ES FR GB IT SE**

(30) Priority: **06.02.1990  US 475569**

(43) Date of publication of application:
**14.08.1991  Bulletin 1991/33**

(73) Proprietor: **GENERAL MOTORS CORPORATION
Detroit Michigan 48202 (US)**

(72) Inventors:
• **DiLiello, Laura K.
  Warren, Ohio 44484 (US)**
• **Miller, Gregory D.
  Warren, Ohio 44483 (US)**
• **Steele, Robert E.
  Cortland, Ohio 44410 (US)**

(74) Representative: **Denton, Michael John et al
Delphi Automotive Systems
Centre Technique Paris
117 avenue des Nations
B.P. 60059
95972 Roissy Charles de Gaulle Cedex (FR)**

(56) References cited:
**US-A- 4 184 740          US-A- 4 184 740
US-A- 4 212 512          US-A- 4 212 512
US-A- 4 213 670**

• **PATENT ABSTRACTS OF JAPAN vol. 6, no. 129
  (P-128)(1007) 15 July 1982**
• **PATENT ABSTRACTS OF JAPAN vol. 9, no. 72
  (P-345)(1795) 2 April 1985**

## Description

This invention relates to a fibre optic assembly for coupling signals between two sets of optical fibres.

A passive fibre optic star is a device used to distribute the optical signals from one fibre optic source to several fibre optic receivers simultaneously, without an external source of power. The heart of a fibre optic star is its mixing element, a device by which the optical signal coming in from any one of several input fibres is distributed more or less evenly among the output fibres. Characteristic features of mixing elements include the number of input and output ports, method of connecting to other elements, uniformity, insertion loss and excess loss. Insertion loss is the amount of attenuation experienced between an input and output port. Excess loss is the amount of attenuation of the input signal before reaching the output ports.

It is already known to employ a slab-type mixer as a fibre optic star. For example, U.S. Patent 4,213,670 discloses a planar fibre optic star wherein the fibres from the transmission line cable are assembled side-by-side along the width of a flat, ribbon fibre mixing element, which is rectangular in cross-section, to form a planar optical coupler. The input and output optical fibres are in line so that they are coupled to opposite ends of the planar mixer. The ribbon has a width greater than the width of all the transmission fibres and has a thickness less than that of the core diameter of the fibres. Shims having a thickness substantially the same as the fibre cladding thickness are used to align the fibre with the ribbon.

US Patent 4,362,357 shows a planar star coupler having input and output fibres arranged in line, in a similar manner to that in US Patent 4,213,670 with the fibres extending from opposite sides of the couples. It also shows a version having a rigid semicircular glass mixer which allows the input and output fibres to extend from the same side of the device. The two groups of fibres lie in the same plane and they are spread over a width at least as great as the maximum dimension of the semicircular mixer.

US Patent 4,484,794 and US Patent 4,449,783 disclose a mixer element formed by a planar waveguide having a thickness which is substantially equal to the diameter of the fibre elements. These also require the input fibres to be in line and extend from opposite sides of the device.

JP-A-57-54913 discloses an assembly in accordance with the preamble of claim 1.

The present invention seeks to provide an improved fibre optic assembly.

A fibre optic assembly in accordance with the present invention is characterised over JP-A-57-54913 by the features specified in the characterising portion of claim 1.

The invention can provide a fibre optic star coupler configured for compactness and convenience of routing of the input and output transmission fibres.

The invention can also provide a fibre optic star coupler which minimizes the insertion loss and at the same time minimizes the effects of production tolerances on the losses.

An embodiment of the present invention is described below, by way of illustration only, with reference to the accompanying drawings, in which:

Figure 1 is an exploded view of an embodiment of fibre optic star and transmission line assembly;
Figure 2 is a cross-sectional view of a star mixer taken along line 2 - 2 of Figure 1;
Figure 3 is an enlarged fragmentary view of an end of the star mixer and transmission fibres, in cross-section, coupled to the mixer;
Figure 4 is a graph of insertion loss due to geometrical mismatch of fibres and the mixer against ribbon thickness;
Figure 5 is a graph of insertion loss due to geometrical mismatch against change in ribbon thickness for two nominal ribbon core thicknesses.

The ensuing description is directed to a star coupler assembly having seven inputs and seven outputs. Other numbers of fibres could be used as well with a corresponding adjustment in the ribbon width. In the described embodiment, each output receives substantially equal amounts of energy from each input so that the outputs will be substantially the same. The disclosed embodiment is particularly well adapted to automotive use and is thus suitable for high volume production at relatively low cost. Plastic optical elements are used but other materials may be used, such as glass.

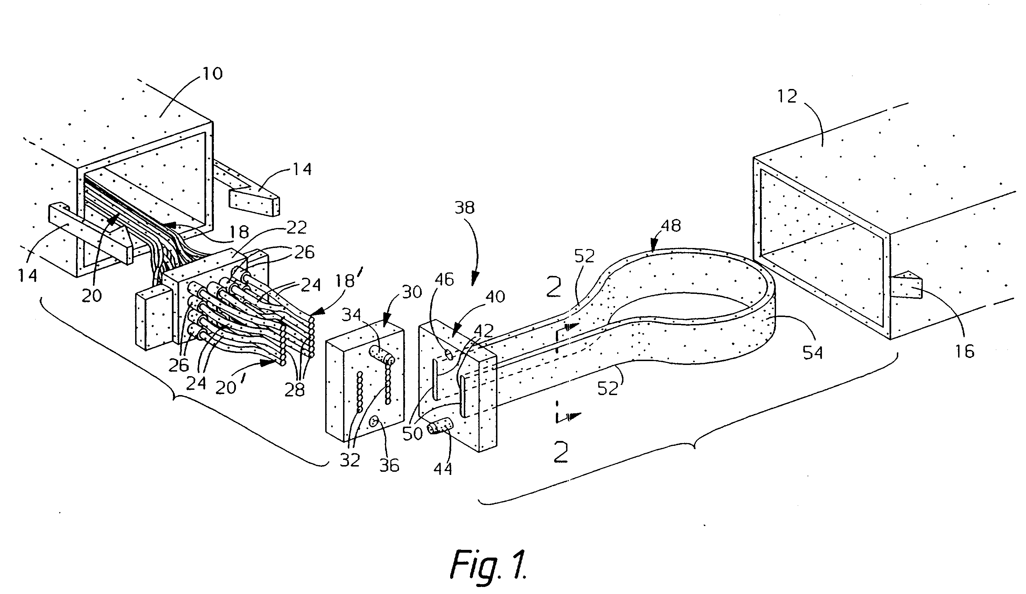

As shown in Figure 1, a box-like housing has two parts 10 and 12 with fingers 14 and lugs 16, respectively, which snap together. Two bundles or sets 18 and 20 of individually jacketed optical transmission fibres enter together through one end of the housing part 10 and are held in an orderly pattern in a multi-apertured block 22 which receives each fibre 24 in its sleeve or jacket 26. The jackets 26 are removed from the ends 28 of the fibres which protrude beyond the block 22. The bare ends 28 are held in a pair of parallel spaced linear arrays 18' and 20' by a fibre holder 30 provided with two lines of holes 32 which snugly receive the ends 28. The ends 28 are cut off flush with the face of the fibre holder 30 and polished. The holder 30 has an alignment pin 34 protruding from the face and an aperture 36 for receiving a similar pin 44, thereby to form one part of the connector 38.

A second part of the connector 38 comprises a ribbon holder 40 having a pair of parallel slots 42 spaced from one another for alignment with the fibre ends 28. A spacing of about 5 mm is desirable, to allow the connector 38 to be small. This second part of the connector 38 also comprises an alignment pin 44 for mating with the aperture 36 of the fibre holder 30 and an aperture 46 for receiving the pin 34. A flexible curved optical ribbon 48, which serves as the star mixer, has two ends 50 secured in the slots 42 fitting flush with the face of the holder 40 and polished. The ribbon ends 50 and the fibre ends 28 are aligned and abut when the connector parts are joined. When the parts are assembled as described above and the two parts 30 and 40 of the connector 38 are joined together, efficient energy coupling occurs between the fibre arrays 18' and 20' and the ribbon 48. The assembly is completed by inserting the ribbon 48 into the housing portion 12 and joining the two housing portions 10 and 12 together.

The fibre holder 30 and the ribbon holder 40 are held together by a friction fit of the pins 34, 44, by bolts and/or screws, or by a spring effect biassing the two holders together, or by any other suitable means.

The flexible ribbon 48 has a hairpin shape, having a concave portion 52 adjoining each end 50 and an intermediate convex portion 54 joining together the concave portions 52. The radius of the curved portion (about 18 mm) is chosen to be much greater than the spacing between the ends 50. The convex portion 54 of the ribbon 48 comprises the major part of the ribbon length and extends through an arc of perhaps 270 degrees or more. The concave portions 52 are just sufficient to connect the convex portions 54 to the ends 50. The convex and concave portions are chosen to have the same radius of curvature.

Materials used for the optical elements comprise PMMA (polymethyl methacrylate), having an index of refraction of 1.492, and a 0.02 mm thick covering having an index of refraction of 1.417 for each fibre, and an index of refraction of 1.405 for the ribbon 48. The fibre ends 28 and the ribbon ends 50 are secured to their respective holders 30, 40 with an optical grade epoxy resin.

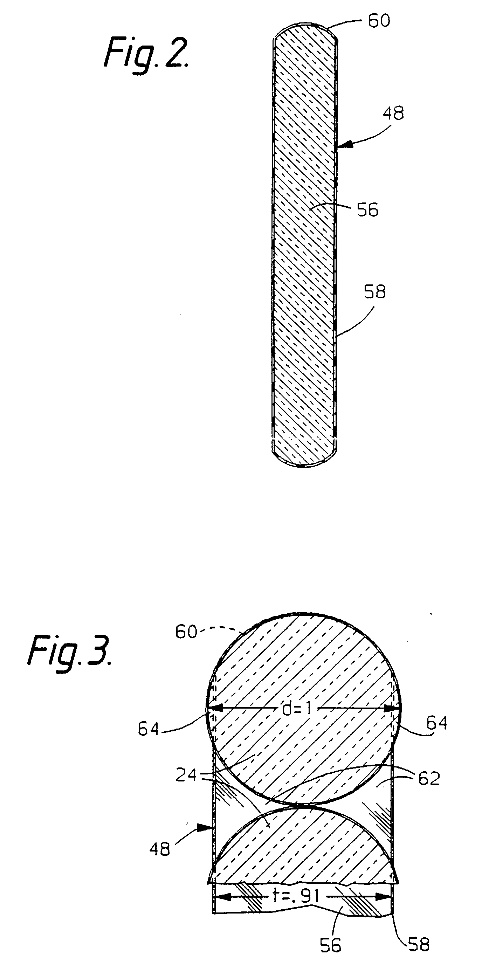

Certain design features have been incorporated to optimize efficiency of light transfer within the ribbon 48 as well as across the interface with the fibres. The ribbon 48 is shown in cross-section in Figure 2. The ribbon core 56 is covered with cladding 58. The width of the ribbon is substantially the same as the sum of the width of the fibre ends in each array. A seven node star coupler for 1 mm diameter fibres is thus 7 mm wide. The side walls 60 of the ribbon are rounded to conform to the shape of fibres at the end of the array, as best shown in Figure 3.

If a rectangular cross-section ribbon is used, the corners of the ribbon extend beyond the fibres at the end of the array so that light is lost upon transmission from the ribbon to the fibres. The rounded side walls 60 prevent such loss. In addition, skew rays emitted from a fibre can have exit angles greater than those allowed for by the side wall of the ribbon. By using rounded side walls instead of flat walls, a smaller angle is presented to the entering ray and some of the skew rays are retained.

As is further shown in Figure 3, the thickness of the ribbon 48 is less than the diameter of the fibres 24. It has been found that for a fibre which is 1 mm in diameter, the optimum ribbon thickness is approximately 0.91 mm, or more specifically 0.908 mm. If the ribbon thickness equals the fibre diameter, light is efficiently coupled from the fibres to the ribbon but much light is lost upon transmission from the ribbon to the fibre due to the large interstitial spaces 62 between the circular fibres. These spaces are reduced in size by making the ribbon thinner than the fibre but that causes some losses during transmission to the ribbon due to segments 64 of the fibre which extend beyond the ribbon 48.

It has been found that the insertion loss, IL, due solely to this geometrical mismatch is

$$IL(k)=10\log\{(1/4kpi)(pi-2\cos^{-1}k+2k^2[(1/k^2)-1]^{1/2})^2\}$$

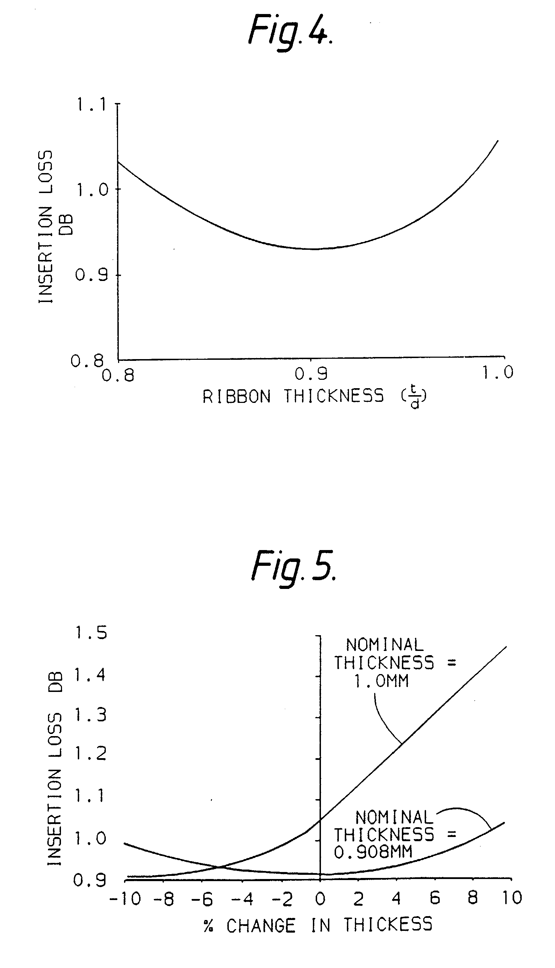

where k=t/d, or the ratio of the ribbon thickness, t, to the fibre diameter, d. This curve is plotted in Figure 4. The smallest insertion loss, about 0.92 db occurs where k=0.908; i.e., the ribbon thickness is approximately 91% of the fibre diameter. Thus the system efficiency is optimized by selecting a ribbon thickness at or very close to this value.

In production of large quantities of optical star assemblies, some variation in thicknesses can be expected. Figure 5 illustrates how the insertion loss due to geometrical mismatch changes with a change in thickness. If the ribbon thickness t is nominally 0.908 mm (for a 1 mm fibre) a plus or minus 8% change in thickness yields an insertion loss which ranges from 0.92 to 0.99 (db). If, however, the nominal thickness is 1 mm, the loss ranges from a minimum of 0.92 db to 1.38 db over a plus or minus 8% variation. The selection of the nominal thickness is thus important in a production situation. The 0.908 mm nominal thickness leads to a variation of 0.07 db over the +/- 8% range while the 1.0 mm nominal thickness results in 0.46 db variation for an 8% range. Thus ribbons having a thickness of substantially 91% of fibre diameter are preferably used. An 8% variation in thickness is acceptable; thus in manufacture the range of variation should be from about 84% to about 98% of fibre diameter.

An ancillary advantage of using a ribbon thinner than the fibre diameter is that the thinner the ribbon, the tighter curvature it can have without unacceptable losses due to its curvature. In general, small curvature radii are avoided to minimize losses in the ribbon 48. For a ribbon of 0.91 mm in thickness, a radius of curvature of 18 mm has been found to be acceptable for both the concave portion 52 and the convex portion 54. In this example, an acceptable loss of 0.1 db is experienced due to the curvature.

It will thus be seen that the insertion loss can be minimized by using a nominal ribbon thickness of 0.91 mm for a 1 mm fibre. It is understood that the minimum loss of 0.92 db does not take into account all the losses involved in the total insertion loss for the optical star but only that due to geometrical mismatch. The use of a connector to attach the fibres to the star allows the user to choose any combination of fibre lengths without having to splice. The curved mixing element permits the input and output fibres to mate to it on the same side of the connector. This enables one connector to be used instead of two and makes directing the fibres away from the star easier. The design can be adapted to accommodate any number of fibres, as will be apparent.

It will be apparent to the person skilled in the art that the fibre optic assembly can be used with optical fibres and/or an optical ribbon which are other than substantially cylindrical; for example, the optical ribbon could have a waisted centre portion 54.

## Claims

1. A fibre optic assembly for coupling signals between optical fibres comprising first and second sets of optical fibres (18,20), each set having contiguous fibre ends (28) arranged in a first or second linear array (18',20') respectively; optical means (48) comprising a curved centre portion (54) and first and second end portions (50) ; and holding means (30,40) for holding each linear array of fibre ends in substantial alignment with its associated end portion so as to couple signals between the fibres and the optical means; wherein the first end portion (50) lies substantially in the same plane as the first linear array (18') of fibre ends and the second end portion (50) lies substantially in the same plane as the second linear array (20') of fibre ends, the planes of the first and second end portions (50) lying spaced from and substantially parallel to one another and said end portions (50) being approximately thinner than the diameter of the associated fibre ends (28); characterised in that the optical means is an optical ribbon (48); in that the fibre ends (28) are the bore ends of the optical fibres, with removed jackets (26); in that each linear array has a width substantially equal to the sum of the diameters of the fibre ends of its respective set of fibres; and in that each end portion (50) has a width substantially the same as the width of its associated linear array of fibre ends.

2. A fibre optic assembly according to claim 1, where the curved centre portion (54) has a predetermined minimum radius of curvature in order to avoid significant optical loss.

3. A fibre optic assembly according to claim 2, wherein the end portions (50) of the optical ribbon (48) are spaced from one another by a distance substantially less than the radius of curvature of the curved centre portion.

4. A fibre optic assembly according to claim 3, wherein the curved centre portion comprises a convex portion (54), a concave portion (52) connecting one end of the convex portion (54) to one of the end portions, and a second concave portion (52) connecting the other end of the convex portion to the other of the end portions.

5. A fibre optic assembly according to any preceding claim, wherein the holding means (30,40) comprises first and second connector parts (30,40), the first connector part having secured thereto the first and second linear arrays (18',20') of fibre ends, and the second connector part having secured thereto the ribbon end portions (50), wherein the first and second connector parts are adapted to hold each ribbon end portion in abutment with its respective linear array of fibre ends.

6. A fibre optic assembly according to any preceding claim, wherein each ribbon end portion (50) has a thickness which is less than the diameter of its associated fibre ends by a predetermined amount in order to minimise insertion loss.

7. A fibre optic assembly according to claim 6, wherein the thickness of each ribbon end portion (50) is in the approximate range of 84% to 98% of the diameter of its associated fibre ends.

8. A fibre optic assembly according to claim 7, wherein the thickness of each ribbon end portion (50) is approximately 91% of the diameter of its associate fibre ends.

9. A fibre optic assembly according to any preceding claim, wherein each ribbon end portion (50) has opposed end edges (60) which are rounded so as to conform substantially to the rounded ends of the opposed ends of its associated linear array, so as to minimise coupling losses.

## Patentansprüche

1. Eine faseroptische Anordnung zum Koppeln von Signalen zwischen Glasfasern mit ersten und zweiten Sätzen von Glasfasern (18, 20), wobei jeder Satz jeweils aneinanderstoßende Faserenden (28) aufweist, die in einem ersten oder zweiten linearen Feld (18', 20') angeordnet sind; einem optischen Mittel (48) mit einem gebogenen zentralen Teil (54) und ersten und zweiten Endteilen (50) ; und einem Haltemittel (30, 40), um jedes lineare Feld von Faserenden im wesentlichen in Ausrichtung mit seinem zugeordneten Endteil zu halten, um so Signale zwischen den Fasern und dem optischen Mittel zu koppeln; bei dem der erste Endteil (50) im wesentlichen in der gleichen Ebene wie das erste lineare Feld (18') der Faserenden liegt und der zweite Endteil (50) im wesentlichen in der gleichen Ebene wie das zweite lineare Feld (20') der Faserenden liegt, wobei die Ebenen der ersten und zweiten Endteile (50) voneinander beabstandet und im wesentlichen parallel zueinander liegen und die Endteile (50) annähernd dünner als der Durchmesser der zugeordneten Faserenden (28) sind; dadurch gekennzeichnet, daß das optische Mittel ein optisches Band (48) ist; dadurch, daß die Faserenden (28) die blanken Enden der Glasfasern mit entfernten Ummantelungen (26) sind; dadurch, daß jedes lineare Feld eine Breite hat, die im wesentlichen gleich der Summe der Durchmesser der Faserenden ihres jeweiligen Satzes von Fasern ist; und dadurch, daß jeder Endteil (50) eine Breite hat, die im wesentlichen die gleiche wie die Breite seines zugeordneten linearen Feldes von Faserenden ist.

2. Eine faseroptische Anordnung nach Anspruch 1, wo der gebogene zentrale Teil (54) einen vorbestimmten minimalen Krümmungsradius hat, um einen signifikanten optischen Verlust zu vermeiden.

3. Eine faseroptische Anordnung nach Anspruch 2, bei der Endteile (50) des optischen Bandes (48) um einen Abstand voneinander beabstandet sind, der im wesentlichen geringer als der Krümmungsradius des gebogenen zentralen Teils ist.

4. Eine faseroptische Anordnung nach Anspruch 3, bei der der gebogene zentrale Teil einen konvexen Teil (54) aufweist, einen konkaven Teil (52), der ein Ende des konvexen Teils (54) mit einem der Endteile verbindet, und einen zweiten konkaven Teil (52), der das andere Ende des konvexen Teils mit dem anderen der Endteile verbindet.

5. Eine faseroptische Anordnung nach einem vorhergehenden Anspruch, bei der das Haltemittel (30, 40) erste und zweite Verbindungsgliedteile (30, 40) umfaßt, wobei der erste Verbindungsgliedteil die ersten und zweiten linearen Felder (18', 20') von Faserenden daran befestigt aufweist und der zweite Verbindungsgliedteil die Bandendteile (50) daran befestigt aufweist, bei der die ersten und zweiten Verbindungsgliedteile geeignet sind, jeden Bandendteil in Anlage an seinem jeweiligen linearen Feld von Faserenden zu halten.

6. Eine faseroptische Anordnung nach einem vorhergehenden Anspruch, bei der jeder Bandendteil (50) eine Dicke hat, die um einen vorbestimmten Betrag geringer als der Durchmesser seiner zugeordneten Faserenden ist, um einen Einführverlust zu minimieren.

7. Eine faseroptische Anordnung nach Anspruch 6, bei der die Dicke jedes Bandendteils (50) im ungefähren Bereich von 84% bis 98% des Durchmessers seiner zugeordneten Faserenden liegt.

8. Eine faseroptische Anordnung nach Anspruch 7, bei der die Dicke jedes Bandendteils (50) annähernd 91% des Durchmessers seiner zugeordneten Faserenden beträgt.

9. Eine faseroptische Anordnung nach einem vorhergehenden Anspruch, bei der jeder Bandendteil (50) gegenüberliegende Endkanten (60) aufweist, die so abgerundet sind, daß sie im wesentlichen den abgerundeten Enden der gegenüberliegenden Enden seines zugeordneten linearen Feldes entsprechen, um so Kopplungsverluste zu minimieren.

**Revendications**

1. Assemblage de fibres optiques destiné à coupler des signaux entre des fibres optiques, comprenant des premier et second ensembles de fibres optiques (18, 20), chaque ensemble comportant des extrémités (28) de fibres contiguës disposées suivant un premier ou second réseau linéaire (18', 20') respectivement, un moyen optique (48) comprenant une partie centrale (54) courbe et des première et seconde parties (50) d'extrémité, et des moyens (30, 40) de retenue pour maintenir chaque réseau linéaire d'extrémités de fibres approximativement aligné sur la partie d'extrémité qui lui est associée de façon à coupler des signaux entre les fibres et le moyen optique, dans lequel la première partie (50) d'extrémité est disposée approximativement suivant le même plan que le premier réseau linéaire (18') d'extrémités de fibres, et la seconde partie (50) d'extrémité est disposée approximativement suivant le même plan que le second réseau linéaire (20') d'extrémités de fibres, les plans des première et seconde parties (50) d'extrémité étant espacés l'un de l'autre et approximativement parallèles l'un à l'autre, et lesdites parties (50) d'extrémité étant approximativement plus minces que le diamètre des extrémités (28) de fibres qui leur sont associées, caractérisé en ce que le moyen optique est un ruban optique (48), en ce que les extrémités (28) de fibres sont les extrémités nues des fibres optiques, avec des gaines enlevées (26), en ce que chaque réseau linéaire a une largeur approximativement égale à la somme des diamètres des extrémités de fibres de son ensemble de fibres correspondant, et en ce que chaque partie (50) d'extrémité a une largeur approximativement identique à la largeur du réseau linéaire d'extrémités de fibres qui lui est associé.

**2.** Assemblage de fibres optiques selon la revendication 1, dans lequel la partie centrale courbe (54) possède un rayon de courbure minimum prédéterminé afin d'éviter une perte optique importante.

**3.** Assemblage de fibres optiques selon la revendication 2, dans lequel les parties (50) d'extrémité du ruban optique (48) sont espacées l'une de l'autre d'une distance nettement inférieure au rayon de courbure de la partie centrale courbe.

**4.** Assemblage de fibres optiques selon la revendication 3, dans lequel la partie centrale courbe comprend une partie (54) convexe, une partie (52) concave reliant une extrémité de la partie convexe (54) à l'une des parties d'extrémité, et une seconde partie (52) concave reliant l'autre extrémité de la partie convexe à l'autre partie d'extrémité.

**5.** Assemblage de fibres optiques selon l'une quelconque des revendications précédentes, dans lequel le moyen (30, 40) de retenue comprend des premier et second éléments (30, 40) formant connecteurs, les premier et second réseaux linéaires (18', 20') d'extrémités de fibres étant fixés au premier élément formant connecteur, et les parties (50) d'extrémité du ruban étant fixées au second élément formant connecteur, dans lequel les premier et second éléments formant connecteurs sont conçus pour tenir chaque partie d'extrémité du ruban en butée contre son réseau linéaire correspondant d'extrémités de fibres.

**6.** Assemblage de fibres optiques selon l'une quelconque des revendications précédentes, dans lequel chaque partie (50) d'extrémité du ruban possède une épaisseur qui est inférieure au diamètre de ses extrémités de fibres associées, d'une quantité prédéterminée afin de minimiser la perte d'insertion.

**7.** Assemblage de fibres optiques selon la revendication 6, dans lequel l'épaisseur de chaque partie (50) d'extrémité du ruban est située dans des proportions comprises entre environ 84 % et 98 % du diamètre des extrémités de fibres qui lui sont associées.

**8.** Assemblage de fibres optiques selon la revendication 7, dans lequel l'épaisseur de chaque partie (50) d'extrémité du ruban est environ de 91% du diamètre des extrémités de fibres qui lui sont associées.

**9.** Assemblage de fibres optiques selon l'une quelconque des revendications précédentes, dans lequel chaque partie (50) d'extrémité du ruban présente des bords (60) d'extrémité opposés qui sont arrondis de façon à épouser approximativement la forme des extrémités arrondies des extrémités opposées du réseau linéaire qui lui est associé, afin de minimiser les pertes de couplage.

Fig. 1.

*Fig.2.*

*Fig.3.*

$d=1$

$t=.91$

## Fig.4.

## Fig.5.